Europäisches Patentamt

European Patent Office

Office européen des brevets

Veröffentlichungsnummer: **0 512 192 A1**

# EUROPÄISCHE PATENTANMELDUNG

Anmeldenummer: **92100473.5**

Int. Cl.5: **A61C 9/00**

Anmeldetag: **14.01.92**

Priorität: **08.05.91 DE 9105744 U**

Veröffentlichungstag der Anmeldung:
**11.11.92 Patentblatt 92/46**

Benannte Vertragsstaaten:
**AT BE CH DE DK ES FR GB GR IT LI LU NL PT SE**

Anmelder: **Herrmann, Josef**
**Elverfeld 5**
**W-4630 Bochum 6(DE)**

Erfinder: **Herrmann, Josef**
**Elverfeld 5**
**W-4630 Bochum 6(DE)**

Vertreter: **Finkener und Ernesti Patentanwälte**
**Heinrich-König-Strasse 119**
**W-4630 Bochum 1(DE)**

Hülle eines Dentalkissens.

Beschrieben wird die Hülle eines Dentalkissens zur Druckübertragung von den Zähnen eines Patienten auf einen Abformlöffel oder dergleichen während einer Abformung. An der Wandung der Hülle (1) ist ein in den Innenraum mündender Schlauch (3) zum zeitweiligen Einleiten eines gasförmigen oder flüssigen Mediums angeschlossen. Das Einleiten von Luft kann auf einfache Weise mittels einer Handpumpe eines üblichen Blutdruckmessers erfolgen. Die Hülle (1) besteht vorteilhafterweise aus einem sterilisierbaren Werkstoff wie z. B. Gummi und ist somit für eine wiederholte Verwendung geeignet.

Fig. 1

EP 0 512 192 A1

Die Erfindung bezieht sich auf eine Hülle eines Dentalkissens zur Druckübertragung von den Zähnen eines Patienten auf einen Abformlöffel oder dergleichen während einer Abformung aus biegsamem Material wie z. B. Kunststoff in einer einer Zahnreihe angepaßten Bügelform.

Bei der Herstellung von Abdrücken mit Hilfe von Abformmaterial und Abformlöffel ist es bekannt, den Abformlöffel nach seiner Positionierung durch den Zahnarzt anschließend mit den Fingern mit einem gewissen Andruck im Mund festzuhalten. Dabei ist es wichtig, während der gesamten Dauer des Aushärtens einen ausreichenden und gleichbleibenden Andruck mit den Fingern auszuüben.

Weiter ist es bekannt, den Andruck auf den Abformlöffel mit den Zähnen des Patienten aufzubringen, wobei zur besseren Druckverteilung zwischen Zähne und Abformlöffel eine Zwischenlage oder ein elastisches Kissen eingelegt wird. Ein solches elastisches Kissen ist aus der DE-AS 28 05 433 bekannt. Für den Patienten läßt sich zwar auf diese Weise in vielen Fällen die Druckübertragung erleichtern, jedoch ist der ausgeübte Druck während der Phase des Aushärtens des Abformmaterials nicht kontrollierbar. Da Druckkissen dieser Art eine vorgegebene Aufmachung und Dicke haben, können individuelle Unterschiede in der Kiefer- bzw. Zahnausbildung der Patienten nicht berücksichtigt werden.

Die Erfindung verfolgt das Ziel, das Abformen von Kieferteilen durch Zuhilfennahme eines Kissens zur Druckübertragung dahingehend zu verbessern, daß der jeweils ausgeübte Druck kontrollierbar ist und außerdem eine Anpassung an die individuellen Unterschiede bei den Patienten erreichbar ist.

Die Lösung dieser Aufgabe besteht erfindungsgemäß in einer Hülle eines Dentalkissens mit einem Einfüllschlauch, durch den jeweils zu Beginn eines Abformvorgangs ein gasförmiges oder flüssiges Medium mit vorgegebenem Druck und in gewünschter Menge einleitenbar ist. Damit besteht die Möglichkeit, sich den jeweiligen Verhältnissen des Patienten optimal anzupassen und während der Dauer des Abformvorgangs den Druck zu überprüfen, indem der Einfüllschlauch mit einem geeigneten Druckmeßgerät verbunden wird.

Vorteilhafte Weiterbildungen ergeben sich aus den Unteransprüchen. So ist es zweckmäßig, den Einfüllschlauch im Bogenbereich an der Außenseite der Hülle anzuordnen.

Hinsichtlich der Gestaltung der Hülle ist es vorteilhaft, sie aus zwei an den Rändern miteinander verbundenen, vorzugsweise verschweißten Wandungshälften zu bilden. Je nach der Art der Herstellung kann vorteilhafter Weise der Schlauch an der Wandung angeformt sein.

Die Hülle ist ohne weiteres für eine wiederholte Verwendung geeignet und wird zu diesem Zweck aus einem sterilisierbaren Werkstoff wie z. B. Gummi hergestellt.

Ein Ausführungsbeispiel einer Hülle eines Dentalkissens ist in der Zeichnung schematisch dargestellt und wird nachfolgend näher erläutert. Es zeigt:

Fig. 1    eine Draufsicht der Hülle,

Fig. 2    eine Schnittansicht in der Ebene der Linie I-I der Fig. 1 und

Fig. 3    eine Ansicht des Schlauchendes der Hülle mit einer angeschlossenen Handpumpe mit zugehörigem Druckmeßgerät.

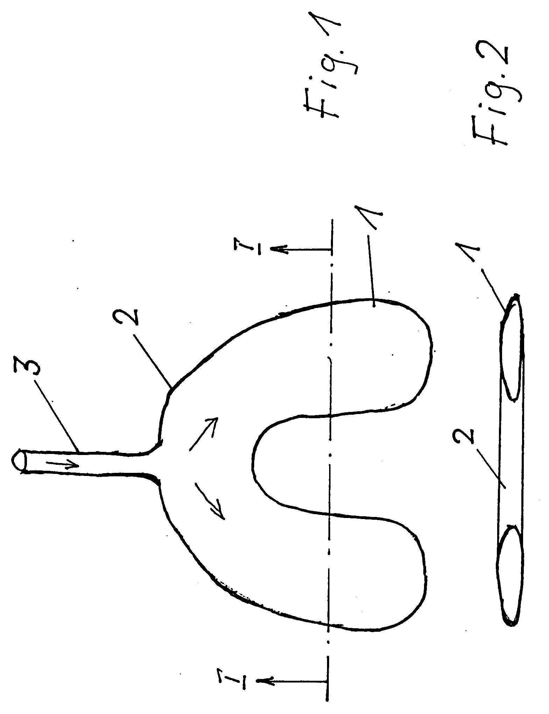

Die Darstellung in Fig. 1 läßt erkennen, daß die Hülle (1) in ihrer äußeren Form der Umrißform eines üblichen Abformlöffels angepaßt ist. Im Bogenbereich (2) der Hülle (1) geht von ihrer Wandung ein Einfüllschlauch (3) aus. In seiner Länge wird der Einfüllschlauch (3) so bemessen, daß eine einfache Handhabung hinsichtlich der Einleitung eines Mediums und der Drucküberwachung durch ein geeignetes Meßgerät gewährleistet ist.

Die Hülle besteht aus einem geeigneten sterilisierbaren Werkstoff wie z. B. Gummi Sie kann auf eine übliche Art hergestellt werden.

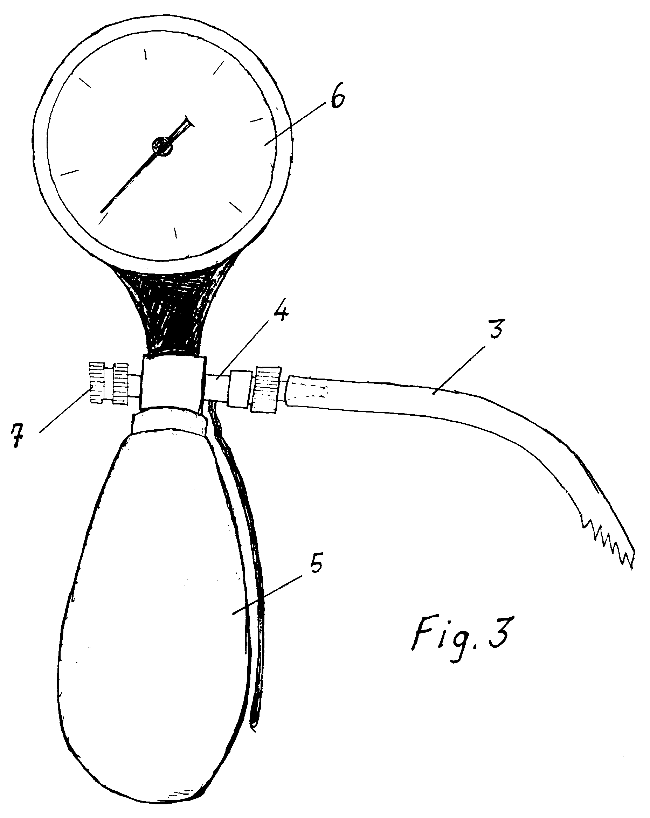

Für das Einfüllen von Luft kann vorteilhafterweise die Handpumpe eines üblichen Blutdruckmessers benutzt werden. Fig. 3 zeigt das Ende des Einfüllschlauches (3) mit dem Anschluß der Armatur (4) einer Handpumpe (5) eines Blutdruckmeßgerätes. Mit der Armatur (4) ist ferner ein Druckmeßgerät (6) verbunden. Durch Betätigen der Handpumpe (5) wird im Innenraum der Hülle (1) ein gewünschter Druck aufgebaut, dessen Druckhöhe am Meßgerät (6) angezeigt wird. Nach Erreichen des gewünschten Druckes wird mit Hilfe des Rädchens (7) die Verbindung zur Handpumpe (6) abgesperrt.

Während der Dauer des Einsatzes der Hülle (1) im Mund des Patienten kann die Aufrechterhaltung des vorgegebenen Druckes am Meßgerät (6) kontrolliert werden. Dies hat zugleich den Vorteil, daß der Abformlöffel mit dem gewünschten Andruck konstant bis zur endgültigen Aushärtung des Abformmaterials gehalten werden kann. Da außerdem der Andruck erstmalig eine meßbare und damit erfaßbare Größe ist, sind für nachfolgende Abformungen am selben Patienten gleichbleibende Ergebnisse erzielbar.

Je nach der eingefüllten Menge des Druckmediums hat das Kissen während der Druckübertragung eine entsprechende Dicke. In der Regel wird man gerade soviel Medium einfüllen, daß sich ein relativ flaches Kissen bildet, so daß an der Druckübertragung auf den Abformlöffel die Kauebenen der Zähne des Patienten so großflächig wie möglich beteiligt sind. Ein flüssiges Medium kann auch mit einer üblichen Injektionsspritze eingefüllt werden. Dabei ist zur Druckkontrolle der Einfüllschlauch an geeigneter Stelle mit einem Druckmeßgerät zu verbinden.

**Patentansprüche**

1. Hülle eines Dentalkissens zur Druckübertragung von den Zähnen eines Patienten auf einen Abformlöffel oder dergleichen während einer Abformung aus biegsamem Material wie z. B. Kunststoff in einer einer Zahnreihe angepaßten Bügelform, dadurch gekennzeichnet, daß an der Wandung ein in den Innenraum mündender Schlauch (3) zum zeitweiligen Einleiten eines gasförmigen oder flüssigen Mediums angeschlossen ist.

2. Hülle nach Anspruch 1, dadurch gekennzeichnet, daß der Schlauch (3) im Bogenbereich (2) an der Außenseite angeordnet ist.

3. Hülle nach Anspruch 1 oder 2, dadurch gekennzeichnet, daß sie aus zwei an den Rändern miteinander verbundenen, vorzugsweise verschweißten Wandungshälften gebildet ist.

4. Hülle nach einem der Ansprüche 1 bis 3, dadurch gekennzeichnet, daß der Schlauch (3) an der Wandung angeformt ist.

5. Hülle nach einem der Ansprüche 1 bis 4, dadurch gekennzeichnet, daß sie aus einem sterilisierbaren Werkstoff wie z. B. Gummi besteht.

6. Hülle nach einem der Ansprüche 1 bis 5, dadurch gekennzeichnet, daß das Ende des Schlauches (3) für den Anschluß an eine übliche Handpumpe (5) eines Blutdruckmessers ausgebildet ist.

Fig.1

Fig.2

EP 0 512 192 A1

Fig. 3

Europäisches
Patentamt

# EUROPÄISCHER RECHERCHENBERICHT

Nummer der Anmeldung

EP    92 10 0473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-2 773 308 (C.P. VAN COURT ET AL) <br> * das ganze Dokument * <br> --- | 1,2,4-6 | A61C9/00 |
| A | DE-A-3 104 721 (STURTZKOPF) <br> * Seite 8, Zeile 11 - Zeile 17; Abbildungen 1,2 * <br><br> ----- | 1-5 | |
| | | | **RECHERCHIERTE SACHGEBIETE (Int. Cl.5)** |
| | | | A61C |

Der vorliegende Recherchenbericht wurde für alle Patentansprüche erstellt

| Recherchenort | Abschlußdatum der Recherche | Prüfer |
|---|---|---|
| DEN HAAG | 13 AUGUST 1992 | VANRUNXT J. |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus andern Gründen angeführtes Dokument
...........................................................................................................
& : Mitglied der gleichen Patentfamilie, übereinstimmendes
　　Dokument

EPO FORM 1503 03.82 (P0403)